(19) Europäisches Patentamt

European Patent Office

Office européen des brevets

(11) **EP 4 764 337 A1**

(12) **EUROPEAN PATENT APPLICATION**

(43) Date of publication:
**24.06.2026 Bulletin 2026/26**

(21) Application number: **24221914.5**

(22) Date of filing: **19.12.2024**

(51) International Patent Classification (IPC):
**F24F 11/46** (2018.01) **G05D 23/19** (2006.01)
**G05B 13/04** (2006.01) **F24H 15/164** (2022.01)

(52) Cooperative Patent Classification (CPC):
**G05B 13/047; F24F 11/46; F24H 15/164;
G05D 23/1951;** F24F 2140/60; G05B 2219/2614

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Mitsubishi Electric Corporation
Tokyo 100-8310 (JP)**

(72) Inventor: **Olkis, Christopher
Livingston, EH54 5DJ (GB)**

(74) Representative: **Pfenning, Meinig & Partner mbB
Patent- und Rechtsanwälte
Theresienhöhe 11a
80339 München (DE)**

(54) **METHOD AND SYSTEM FOR OPTIMIZING HVAC OPERATION**

(57) Embodiments of this application provide a method and system for operating an HVAC system, particularly in systems comprising heat pumps and thermal energy storage (TES) devices. The method includes: dividing an operational period into a number of sub-periods, where each sub-period represents a distinct portion of the operational period; obtaining information for operating the heat pump for at least some of the sub-periods, where the information may include factors such as energy demand, weather conditions, or grid stability; determining an operational state for the heat pump for each sub-period based on the obtained information; and controlling the heat pump based on the determined operational state for each sub-period. This method ensures efficient and robust operation of the system through the control of the heat pump by determining its operational state.

Fig. 1

EP 4 764 337 A1

**Description**

**TECHNICAL FIELD**

The present invention relates to the field of heating, ventilation, and air conditioning (HVAC) systems. More specifically, it relates to methods and systems for optimizing the operation of HVAC systems that incorporate heat pumps and thermal energy storage (TES) devices in buildings.

**BACKGROUND**

Various methods and systems for controlling HVAC systems have been proposed in the prior art. For instance, Kuboth et al. (2019) disclose an application of Model Predictive Control (MPC) to a residential single-family building. Their system couples thermal and electric supply by an air source heat pump with part load capability and simultaneously controls domestic hot water, space heating, and a battery storage. While this approach showed an operational cost reduction of 11.6% compared to PID-control in annual simulations, it relies on complex MPC algorithms that require significant computational resources and may be challenging to implement in real-world scenarios with uncertainties.

Another relevant prior art is disclosed in the patent WO 2022/168049 A1, which proposes a method for controlling a premises heating installation using an air source heat pump. This method involves receiving weather forecast data from an external source and local weather status information, and controlling the heat pump based on this information. However, while this approach utilizes weather forecast data and shows some predictive control capabilities, it lacks specificity in its determination process and may not provide a robust framework for adapting to diverse real-world conditions.

These conventional technologies, while showing promise in reducing operational costs or incorporating environmental data, often rely on complex control algorithms or lack a structured approach to determining operational modes. This can lead to difficulties in practical implementation and may not perform optimally under real-world uncertainties.

**SUMMARY**

The object of the invention is to provide a method for an HVAC system that achieves cost-effective and energy-efficient operation while being robust and practical to implement.

The invention is defined by the appended claims.

According to a first aspect of the present invention, a method of operating a HVAC system is provided. The system comprises a heat pump and a thermal energy storage (TES) device which is thermally connected to the heat pump. The method involves dividing an operational period into a number of sub-periods, obtaining information for operating the heat pump for at least some of the sub-periods, determining an operational state for the heat pump for the sub-period based on the information, and controlling the heat pump based on the determined operational state.

It is to be understood that the operational period and the sub-periods refer to time periods in the present application. It is also to be understood that dividing the operational time period may broadly encompass setting the operational period and its sub-periods, which includes, but is not limited to, the following methods: (1) segmenting an operational period into smaller units, (2) concurrently defining an operational period and its constituent sub-periods, (3) receiving information regarding a time structure or schedule, such as a pre-configured 24-hour schedule with hourly sub-periods, present in the system or any external server. Additionally, in cases where the system has already established operational periods and sub-periods, the use of this information is also considered to fall within this step. The steps of dividing the operational period and obtaining the information can be performed interchangeably. It is preferable to perform the subsequent steps of determining the operational states and controlling the heat pump in this order, although other variations in the order may be possible depending on specific implementation requirements.

The term "operational state" in the present application refers to a predefined mode of operation for the heat pump, designed to meet specific needs and optimize system performance. In a possible implementation, the heat pump may operate with a degree of autonomy within each operational state, allowing it to function without constant further instructions from the system once the operational state is set. It means that the system can operate without any feedback loop from the heat pump. Specific examples of the operational state will be described later. Furthermore, the term "information for operating the heat pump" in the present application should be broadly interpreted to include any data or forecasts that can be used to determine the operational state of the heat pump. Specific examples thereof will also be described later.

This method allows for dynamic optimization of the HVAC system's operation based on various factors. By dividing the operational period into sub-periods and determining the operational state for each sub-period, the system can adapt to changing conditions throughout the operational period without requiring complex control algorithms. This method also enables practical and robust efficient operation, leading to improved energy efficiency and reduced operational costs compared to conventional systems. This method further contributes to stabilisation of electricity grid and reduction of CO2 emission.

In a possible implementation, the operational state may be selected from a plurality of operational states including a first operational state to prohibit the heat pump from operating, and a second operational state to operate the heat pump for thermally charging the thermal energy storage device. The first operational state to prohibit the heat pump from operating may include, but is not limited to, putting it in a sleep or standby state, or any other state where the heat pump does not actively use electrical energy for operating to heat or cool.

By defining specific operational states, the system can make more detailed decisions about when and how to operate the heat pump. This enables more efficient use of the TES device, allowing energy storage when it is cheap or abundant and usage when energy is expensive or scarce, contributing to cost savings and improved energy efficiency. This also enables the system to function without a feedback from heat pump, thereby leading to efficient and robust operation of the system.

In a possible implementation, the determining the operational state comprises identifying a first set of one or at least two consecutive sub-periods based on the information within the operational period, and determining the operational state as the first operational state to the first set of the sub-periods. Specifically, the determination of the operational state based on the information in the present application may mean that the system analyses the information and if this information meets a specific pre-determined condition, a specific operational mode of the heat pump is allocated for the sub-periods in accordance with a predetermined algorithm. Also, " consecutive sub-periods" refer to two sub-periods that follow one another directly in sequence within the operational period, without any intervening sub-periods so that the heat pump can keep operating in a same operational state for these sub-periods.

This feature enables the system to identify specific periods when it is most advantageous to prohibit the heat pump from operating. As already mentioned above, it is to be understood the periods in the present application may refer to time periods. By considering consecutive sub-periods, the system can prevent frequent ON/OFF cycling of the heat pump, thereby extending its lifespan. Additionally, by reducing the complexity of control operations, this method contributes to a more robust and reliable system operation.

In a possible implementation, the determining the operational state as the first operational state to the first set of the sub-periods may be performed only when a volatility of the information over the operational period exceeds a predetermined threshold.

This feature allows the system to identify specific periods when the heat pump is prohibited from operating, thereby avoiding operation during unfavorable conditions. By enabling control over consecutive time periods, it reduces frequent ON/OFF cycling of the heat pump, thereby extending its lifespan. This targeted prohibition of the heat pump operation leads to cost savings and improved overall efficiency.

In a possible implementation, the determining the operational state may further comprise identifying, among the sub-periods for which the first operational state is not determined, a second set of one or at least two consecutive sub-periods based on the information within the operational period, and determining the operational state as the second operational state to the second set of the sub-periods.

This feature ensures that thermal energy is stored when conditions are most favorable. This targeted charging leads to cost savings and improved utilization of energy sources.

In a possible implementation, the determining the operational state may further comprise identifying, among the sub-periods for which any operational state is not determined, a third set of one or at least two consecutive sub-periods based on the information within the operational period, and determining the operational state as the second operational state to the third set of the sub-periods, wherein a predetermined time interval is provided between the second set of the sub-periods and the third set of the sub-periods.

This allows the system to take advantage of multiple favorable periods throughout the the operational period, thereby improving flexibility and efficiency of the system operation. This also enables the system to operate efficiently with a TES having limited storage capacity.

In a possible implementation, the system may further comprise a heating and/or a cooling emitter, the emitter being thermally connected to the heat pump. The plurality of operational states may further include a third operational state to operate the heat pump for space heating or cooling by means of the emitter. The determining the operational state may comprise identifying, among the sub-periods for which any operational state is not determined, a fourth set of one or at least two consecutive sub-periods based on the information within the operational period, and determining the operational state as the third operational state to the fourth set of the sub-periods.

This feature allows the system to provide direct heating or cooling when it's most needed or cost-effective, improving comfort for building occupants while maintaining overall system efficiency.

In a possible implementation, the information for operating the heat pump may include cost information for operating the heat pump.

By using cost information, such as time-of-use (ToU) pricing forecasts, to determine the heat pump's operational mode, the system can optimize its overall performance and reduce operating costs, especially in cases where electricity prices fluctuate throughout the day. As the cost information can relate to electricity grid demand, this also contributes to the stabilization of the electricity grid and the reduction of CO2 emissions. Additionally or alternatively, the information for operating the heat pump may include grid power demand forecasts.

In a possible implementation, the information for operating the heat pump may further include environmental information.

The inclusion of environmental information allows the system to consider factors such as weather forecasts or solar radiation in its determination process. This leads to more accurate predictions of heating or cooling needs and helps the system take advantage of favorable environmental conditions. Additionally, when the system includes a photovoltaic (PV) unit, this information can be used to identify periods of high renewable energy availability, which can coincide with lower electricity prices, allowing for further optimization of heat pump operation and CO2 emission reduction. Furthermore, in cases where the grid power demand forecasts are available, the environmental information can be used to estimate the potential supply of renewable energy, thereby enabling to determine the grid load more accurately, leading to more efficient heat pump operation and improved grid stability.

In a possible implementation, the system may further comprise the photovoltaic (PV) unit for generating electrical energy. The method may further comprise determining, based on the environmental information, predicted energy generation by the PV unit, and determining the operational state also based on the predicted energy generation.

The coordination of the system's operation with on-site renewable energy generation allows for the improvement of self-sufficiency and the use of self-generated renewable energy. By predicting PV generation and incorporating this into its determination process, this leads to further cost savings, enhanced self-sufficiency, and reduced reliance on the grid. Additionally, this coordination also contributes to grid stability by reducing demand during peak periods.

In a possible implementation, the determining the operational state may further comprise identifying, based on the predicted energy generation by the PV unit, at least some of the sub-periods during which the building is expected to have a surplus of electrical energy from the PV unit, and determining the operational state as the second operational state for at least some of the identified sub-periods.

This feature supports increased self-consumption of renewable energy and reduces energy export to the grid. It leads to enhanced overall energy efficiency and cost savings.

In a possible implementation, the HVAC system may be for a building, and the heat pump may be controlled to operate in a low power mode in the first operational state when ambient temperature of the building based on the environmental information is below a predetermined threshold.

Operating the heat pump in low power mode during periods that are not optimal for heat pump operation improves the balance between system efficiency and occupant comfort. This feature is particularly beneficial in very cold conditions, leading to improved system reliability and occupant comfort while maintaining energy efficiency.

In a possible implementation, the sub-period may have a length of time greater than or equal to 5 minutes, preferably greater than or equal to 15 minutes, more preferably greater than or equal to 30 minutes, and/or shorter than or equal to 120 minutes, preferably shorter than or equal to 90 minutes, more preferably shorter than or equal to 60 minutes. A range of the sub-period may also be between 5 and 120 minutes, preferably between 30 and 60 minutes.

The definition of a specific range for the sub-period duration allows for a balance between granular control and computational efficiency. This range enables the system to respond to relatively short-term changes in conditions while avoiding excessive switching of operational states, leading to improved system performance and reliability.

In a possible implementation, the operational state may be represented by an identifier selected from a plurality of predefined identifiers. The method may further comprise generating a sequence of identifiers for the operational period based on the determined operational states for the sub-periods, and controlling the heat pump throughout the operational period based on the sequence of identifiers.

The use of predefined identifiers to represent and communicate the operational modes provides an efficient way to manage and process the operational schedules of the heat pump throughout the operational period. This feature allows the system to efficiently generate and communicate the operational schedule to the heat pump without the need for frequent real-time calculations or feedback from the heat pump, thereby leading to a simplified and robust operation of the system which is easy to implement.

The above-described methods may be implemented by the computer.

According to a second aspect of the present invention, a HVAC system is provided comprising a heat pump, a thermal energy storage (TES) device which is thermally connected to the heat pump, and a scheduler for determining an operational state of the heat pump. The scheduler is configured to divide an operational period into a number of sub-periods, obtain, for at least some of the sub-periods, cost information for operating the heat pump and environmental information, and determine, based on the cost information and the environmental information, an operational state for the heat pump for the sub-period. The heat pump is configured to operate according to the determined operational state.

This system configuration, which corresponds to the method described in the previous aspects, allows for dynamic optimization of the operation based on various factors. By dividing the operational period into sub-periods and determining the operational state for each sub-period, the system can adapt to changing conditions throughout the operational period without requiring complex control algorithms. This system enables practical and robust efficient operation, leading to improved energy efficiency and reduced operational costs compared to conventional systems.

## BRIEF DESCRIPTION OF DRAWINGS

FIG. 1 is a diagram of the HVAC system according to an embodiment.

FIG. 2 is a schematic diagram illustrating the process to create an operating schedule for the HVAC system according to the embodiment.

FIG. 3 is a flowchart for determination of the operational state of the heat pump according to the embodiment.

FIG. 4 is a representation of external data used for system predictions and calculations.

FIG. 5 is an illustration of power consumption calculations for the heat pump system.

FIG. 6 is a graphical representation of the heat pump operation schedule.

FIG. 7 is a diagram showing temperature setpoint adjustments for optimizing comfort and efficiency.

FIG. 8 is a flowchart depicting the decision-making process for schedule creation in systems with energy storage capabilities.

FIG. 9 is a schematic diagram illustrating the control logic adaptation for cooling functionality.

FIG. 10 is a flowchart demonstrating the process for monitoring and adjusting forecast accuracy in the system.

## DESCRIPTION OF EMBODIMENTS

### HVAC System configuration

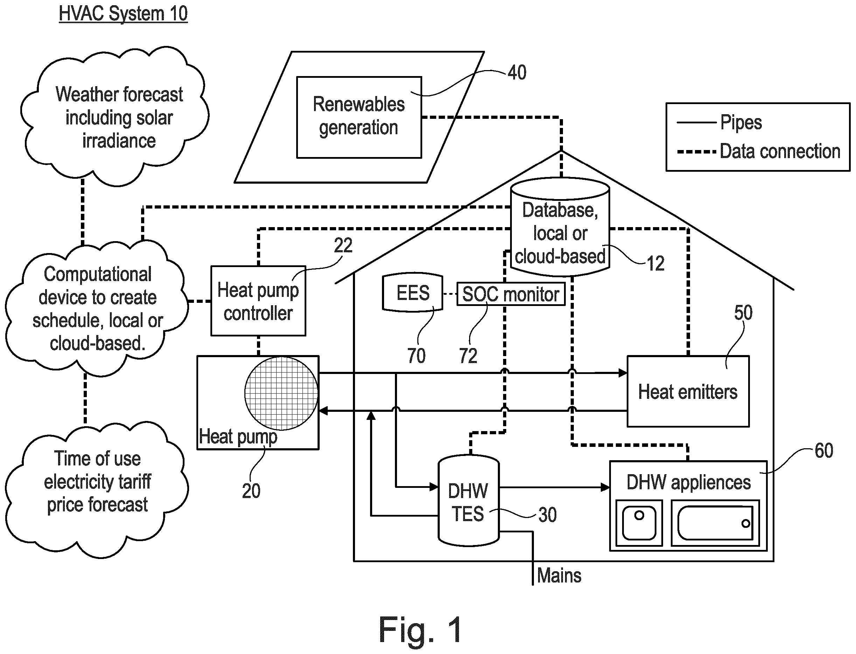

Referring to the system diagram in FIG. 1, the specific configuration of this system will be explained.

The HVAC system 10 is installed to manage heating, ventilation, and air conditioning in a building. The HVAC system 10 includes a heat pump 20. The system is connected to the electrical grid, allowing it to draw power when needed for various components, including the heat pump 20. The heat pump 20 functions as the primary source of heating and hot water for the building. The heat pump is controlled by a heat pump controller 22, which can be programmed to operate the heat pump in various operational modes depending on current needs and conditions.

The system further includes a thermal energy storage (TES) device 30, which can store heat generated by the heat pump and release it for later use. This TES device is thermally connected to the heat pump and thus can be thermally charged by means of the heat pump. The TES device may be implemented as a domestic hot water (DHW) thermal energy storage device or phase change material (PCM) based thermal energy storage device. The DHW TES can be implemented using hot water tanks, which can store hot water generated by the heat pump. The system may also includes DHW appliances 60 that utilise the hot water stored in the DHW TES.

For space heating, the system may further include a heating and/or a cooling emitter 50, which is shown as heat emitters in FIG. 1. These emitters are thermally connected to the heat pump, and can distribute heat from the heat pump throughout the building, adjusting indoor temperatures.

The system may further include a renewable energy generation device 40, such as a photovoltaics unit (PV unit). The energy production from this unit can potentially be used to power the system components, reducing the need for grid electricity. Any excess energy produced by the PV unit may be fed back into the grid. The energy production from this unit can potentially be predicted based on environmental information, which can be obtained using internal and/or external services, allowing the system to anticipate and optimize the use of renewable energy. The system may optionally include an electrical energy storage (EES), and any excess energy may be stored therein. The system may further be equipped with a state of charge (SOC) monitor 72 to monitor the SOC of the EES 70.

To optimize system operation, a computational device may create operating schedules based on various inputs. The computational device can be arranged locally or in a cloud server. The inputs may be obtained by means of a database 12 which can be arranged locally or in a cloud server, and may be shared with other components including the heat pump controller 22. The inputs includes information for operating the heat pump, which can be cost information and/or the environmental information. The cost information may include and time-of-use (ToU) electricity tariff forecasts and the environmental information may include weather forecasts or solar irradiance predictions. These information can be obtained from sources such as Octopus Energy™'s API. This data-driven approach may allow the system to make proactive decisions about when to operate the heat pump, charge the thermal storage, or use stored energy, potentially maximizing efficiency and minimizing costs.

By integrating these components and utilizing control strategies based on the collected data, this energy management system may provide an efficient solution for HVAC operation in buildings. The system may adapt to changing environmental conditions and energy prices while maintaining occupant comfort.

## Subdivision of the operational period

The heat pump operating schedule is created for a specified operational period, typically 24 hours, but it can also be set for a specific period of 6, 12, or 48 hours depending on the system requirements and forecast data availability. This operational period is then subdivided into smaller time intervals to allow for more granular control and optimization.

The subdivision of the operational period results in a series of time steps, each representing a specific interval within the overall schedule. These time steps, or sub-periods, may have a length of time greater than or equal to 5 minutes, preferably greater than or equal to 15 minutes, more preferably greater than or equal to 30 minutes, and/or shorter than or equal to 120 minutes, preferably shorter than or equal to 90 minutes, more preferably shorter than or equal to 60 minutes. A range of the sub-period may also be between 5 and 120 minutes, preferably between 30 and 60 minutes, which is effective to balance control precision with computational efficiency.

In a possible implementation, a 24-hour operational period might be divided into 48 sub-periods of 30 minutes each. This level of granularity allows the system to adapt to changing conditions throughout the day, such as fluctuations in energy prices, weather patterns, or predicted energy demand.

The subdivision of the operational period enables the creation of a detailed schedule that provides specific heat pump controls for each sub-period. These controls can include setpoints for various parameters such as heat pump operating mode, indoor temperature (if applicable), and compressor frequency (if applicable).

## Determination of the operational state of the heat pump

The heat pump 20 can operate in various operational states, each designed to meet specific needs and optimize system performance. These operational states are determined by the system 10. Specifically, they can be determined by the heat pump controller 22.

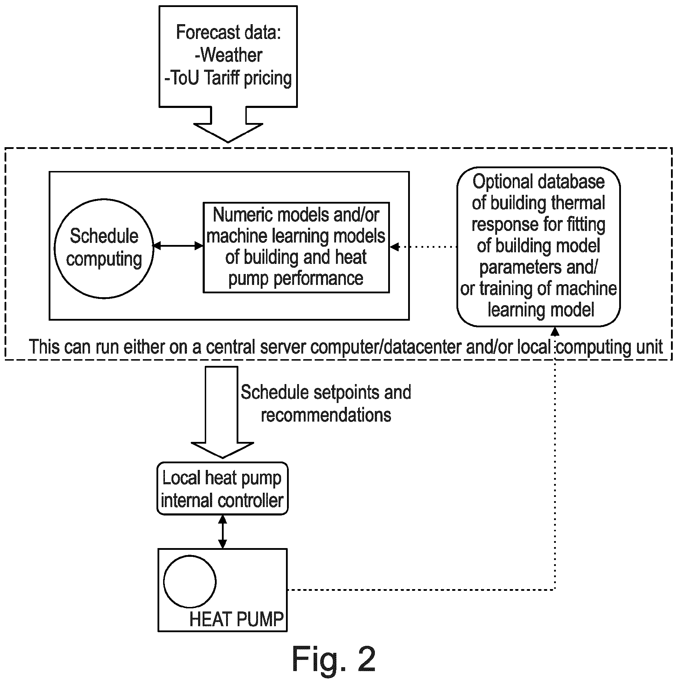

Referring to a diagram of the system controller in FIG. 2, the heat pump controller 22 can be a supervisor controller that creates an operating schedule based on external data and modeling components. The head pump may further include a local heat pump controller on the building level (not shown in FIG. 1). The following paragraphs will detail the types of operational states and their characteristics, explaining how each state contributes to the overall efficiency and functionality of the HVAC system.

It should be noted that within each operational state, the heat pump can operate with a degree of autonomy, allowing it to function without constant further instructions from the system once the state is set. This means that the system can operate efficiently without requiring a continuous feedback loop from the heat pump, contributing to the robustness and simplicity of the overall system operation.

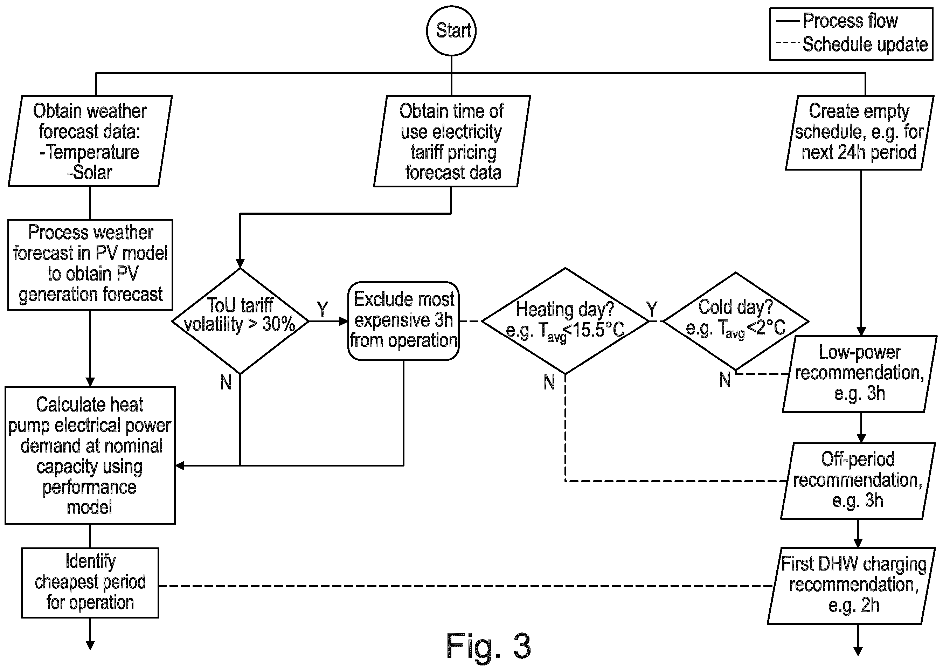

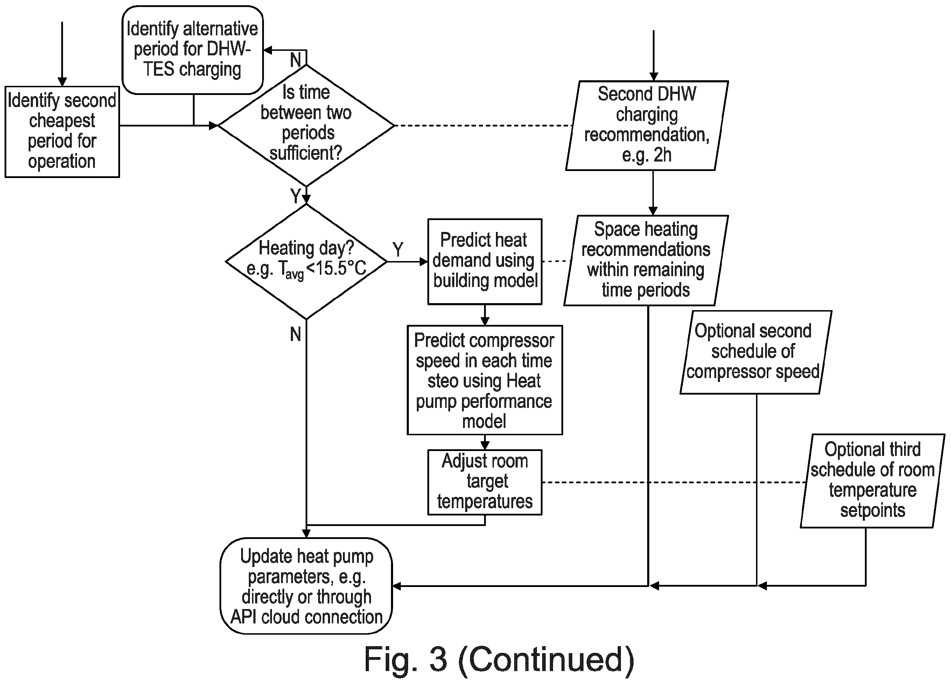

The operational states of the heat pump are determined through a process illustrated in the flowchart of FIG. 3.

**(STEP 1)** Initially, the system obtains forecast data for Time-of-Use (ToU) tariff and weather conditions. This information can be acquired through APIs provided by energy suppliers and weather services. For example, ToU tariff forecasts can be obtained from sources like Octopus Energy's API, while weather data including temperature and solar irradiance predictions can be sourced from meteorological services. The system may also use internal sensors or historical data to supplement or verify these forecasts.

**(STEP 2)** An empty array for schedule recommendations is created, which corresponds to the step of dividing the operational period into a number of sub-periods as mentioned earlier. For example, this array may represent 24 hours in 1-hour time steps, more preferably in 0.5-hour time steps. This division of the operational period into the sub-periods may include, but is not limited to, segmenting an operational period into smaller units, concurrently defining an operational period and its constituent sub-periods, or obtaining information about a time structure or schedule present in the system or any external server. In cases where the system has already established operational periods and sub-periods, the use of this information may also correspond to this step. The array is filled while being processed and passed within the control steps.

**(STEP 3)** The system analyzes the volatility of electricity prices. If the price variation exceeds a predefined threshold (e.g., 30% difference between highest and lowest price), the most expensive periods, such as 3 hours, are excluded from heat pump operation. These periods are labeled with identifier "1" (a first set of the sub-periods), indicating energy conservation periods where the operation of the heat pump is prohibited, and thus DHW charging and space heating are prohibited (see below Table 1).

Table 1

| 1 | , | 3 | 4 | 5 | 6 | 7 | 8 | 9 | 10 | 11 | 12 | 13 | 14 | 15 | 16 | 17 | 18 | 19 | 20 | 21 | 22 | 23 | 23 |
|---|---|---|---|---|---|---|---|---|----|----|----|----|----|----|----|----|----|----|----|----|----|----|----|
|   |   |   |   |   |   |   |   |   |    |    |    |    |    |    | 1  | 1  | 1  |    |    |    |    |    |    |

Optionally, for very cold days, e.g., when the ambient temperature is below 2°C, the system may recommend energy conservation measures. This involves reducing the heat pump's thermal output, for example to 50% capacity, during the most expensive 3-hour period, labeling these periods with identifier "2" (see below Table 2).

Table 2

| 1 | 2 | 3 | 4 | 5 | 6 | 7 | S | 9 | 10 | 11 | 12 | 13 | 14 | 15 | 16 | 17 | 18 | 19 20 | 21 | 22 | 23 | 23 |
|---|---|---|---|---|---|---|---|---|----|----|----|----|----|----|----|----|----|-------|----|----|----|----|
|   |   |   |   |   |   |   |   |   |    |    |    |    |    |    |    | 2  | 2  |       |    |    |    |    |

Alternatively and optionally, the system may allow normal heat pump operation even at full output during expensive periods to improve comfort. Preferably, instead of using a rule-based threshold based on average ambient temperature, the building model can be used to calculate heat losses and predict room temperatures to decide if the comfort loss exceeds the cost savings.

**(STEP 4)** Next, the system processes solar irradiance and weather forecasts using a photovoltaics model to predict solar energy generation. This prediction is used to optimize the use of renewable energy. This prediction is represented by an array $P_{PV}$, which preferably has the same dimension as the schedule array, e.g., length 24. The PV model is optimized for the building's specific PV system, considering factors such as model, efficiency, tilt angle, direction, and latitude.

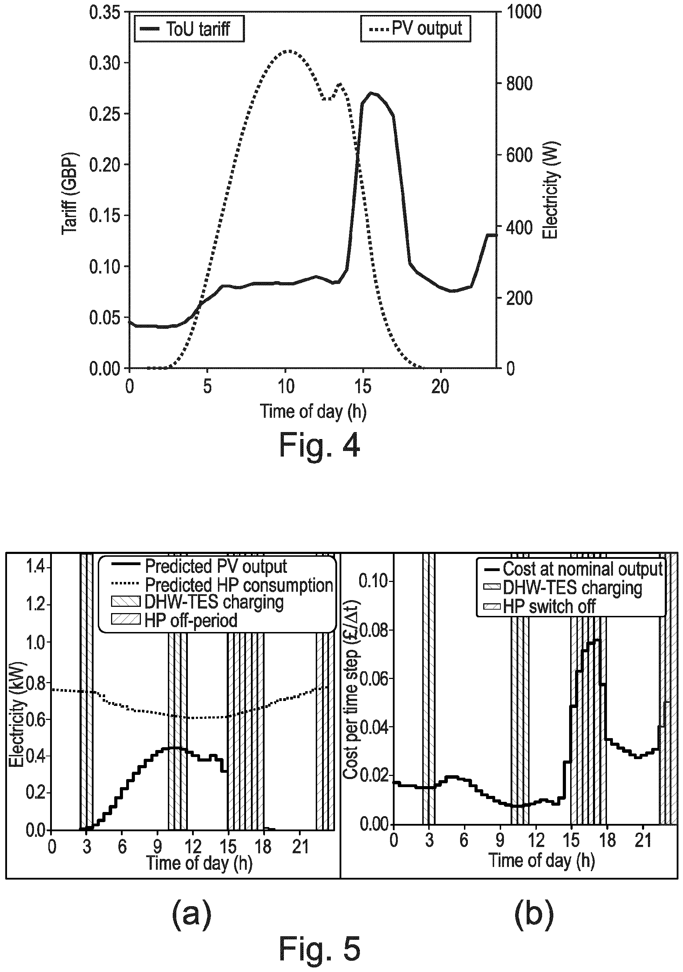

FIG. 4 shows external data for ToU tariff and weather used to predict PV output. The data shows a mild day with plenty of sunshine and a smaller PV system of eight solar panels located in Scotland, UK. This external data is crucial for the system to optimize the heat pump's operation schedule, taking into account both energy prices and potential renewable energy generation.

**(STEP 5)** Prediction of electricity consumption and operating cost can be used for optimizing the heat pump's operation. The system obtains $P_{el,HP}$ for the heat pump and/or the entire building's energy system, assuming constant operation throughout the day. $P_{el,HP}$ is calculated using a heat pump performance model, considering factors such as nominal capacity, 55°C flow temperature, and ambient temperature from weather forecasts. The $P_{el,HP}$ array is designed to have the same dimension as the schedule array, typically with a length of 24 corresponding to hourly intervals.

The heat pump performance and/or building electricity consumption model can be based on various approaches, including: (i) Simple heat pump performance charts, (ii) Equations (e.g., polynomials) fitted to experimental data for the specific heat pump type, (iii) Numerical models of the heat pump and/or its components (compressor, evaporator, condenser, LEV), and (iv) Machine learning or artificial intelligence tools trained on relevant data.

The system then calculates imported electricity ($P_{el,imp}$) by subtracting PV generation from heat pump consumption. Negative values of $P_{el,imp}$, indicating an electricity surplus, can be set to zero if electricity exports are not rewarded by the utility company:

$$P_{el,imp}(P_{el,imp} < 0) = 0.$$

$P_{ei,imp}$ should preferably have the same dimension as the schedule array, e.g. length 24.

The imported electricity cost ($C_{el}$) is calculated by multiplying the ToU electricity price forecast for each time step with the imported electricity $P_{el,imp}$.

FIG. 5 shows the calculation of the heat pump's nominal power consumption and the resulting imported electricity. In part (a), the nominal HP power consumption is calculated. Then, the PV electricity is subtracted from it to obtain the imported electricity. Part (b) shows how the imported electricity is multiplied with the ToU tariff to calculate the cost per time step, assuming that the heat pump would constantly operate at nominal capacity. This cost calculation is used to identify the most expensive periods during which the heat pump is switched off and to identify the two most advantageous periods for DHW charging. The figure shows examples for 30-minute time steps, while the description in the following paragraphs uses 1-hour time steps for simplicity.

**(STEP 6)** Based on these calculations, the system identifies the most cost-effective periods for charging the DHW-TES. The system designates the cheapest period, preferably a 2-hour block, for DHW-TES charging and labels it with identifier "3" (a second set of the sub-periods, see below Table 3).

Table 3

| 1 |   |   | 2 3 4 5 6 |   |   | 7 | s | 9 | 10 | 11 | 12 | 13 | 14 | 15 | 16 | 17 | 18 | 19 | 20 | 21 | 22 | 23 | 23 |
|---|---|---|-----------|---|---|---|---|---|----|----|----|----|----|----|----|----|----|----|----|----|----|----|----|
|   |   |   |           |   |   |   |   |   | 3  | 3  |    |    |    |    | 1  | 1  | 1  |    |    |    |    |    |    |

(STEP 7) The second cheapest period, also preferably a 2-hour block and at least 6 hours apart from the first period, is labeled with identifier "4" (a third set of the sub-periods). These periods allow for efficient DHW-TES charging while ensuring sufficient time for DHW consumption between charging cycles, thereby enabling the system to function with DHW having limited storage capacity (see below Table 4).

Table 4

| 1 | 2 | 3 | 4 | 5 6 7 8 | 9 10 11 12 | 13 14 15 16 | 17 18 19 20 | 21 22 23 23 |
|---|---|---|---|---------|------------|-------------|-------------|-------------|
|   |   |   |   |         | 3 3        | 1           | 1 1         | 4 4         |

For heating days, typically when the average ambient temperature is below 15.5°C, the building model and heat pump model can be used to establish a heating schedule. The aim is to maintain a schedule to find cheaper periods for space heating, while maintaining the comfort at the temperature setpoint. In addition, the schedule can be used to avoid frequent compressor restarts. The heating schedule fills the gaps in the existing schedule as shown above.

The heating schedule merely allows space heating in the given time period without any further specifications. The local heat pump controller takes this as input and applies its own control strategy for space heating. In this case, the remaining blank spaces within the heating schedule are recommended for space heating and are indicated by "5" (see below Table 5). This method is simple and robust, and can be beneficial if computational power is reduced and/or simple, low-level performance and building models are applied. This also represents the most robust method of introducing the schedule into heat pump control.

Table 5

| 1 | 2 | 3 | 4 5 | 6 7 8 | 9 10 11 12 13 14 15 | 16 17 18 | 19 20 | 21 22 23 23 |
|---|---|---|-----|-------|---------------------|----------|-------|-------------|
| 5 | 5 | 5 | 5 5 | 5 5 5 | 5 3 3 5 5 5 5       | 1 1 1    | 5 5   | 5 5 4 4     |

Another approach utilizes the building and heat pump models to identify the most beneficial periods for space heating, as well as the less beneficial periods labeled with "6" in the schedule (see below Table 6). This method is aimed at cost reduction, self-sufficiency, and/or self-consumption. On mild days, where the heat pump's minimal thermal output exceeds the building's thermal losses, this method can also be used to avoid too many on-off cycles of the compressor, which helps to extend the compressor's lifetime. By predicting the building's heat losses, this approach allows for more precise control of the heating process.

Table 6

| 1 | 2 | 3 | 4 | 5 | 6 | 7 | s | 9 | 10 | 11 | 12 | 13 | 14 | 15 | 16 | 17 | 18 | 19 | 20 | 21 | 22 | 23 | 23 |
|---|---|---|---|---|---|---|---|---|----|----|----|----|----|----|----|----|----|----|----|----|----|----|----|
| 5 | 5 | 6 | 6 | 6 | 5 | 5 | 5 | 5 | 3  | 3  | 5  | 5  | 6  | 5  | 1  | 1  | 1  | 5  | 6  | 5  | 5  | 4  | 4  |

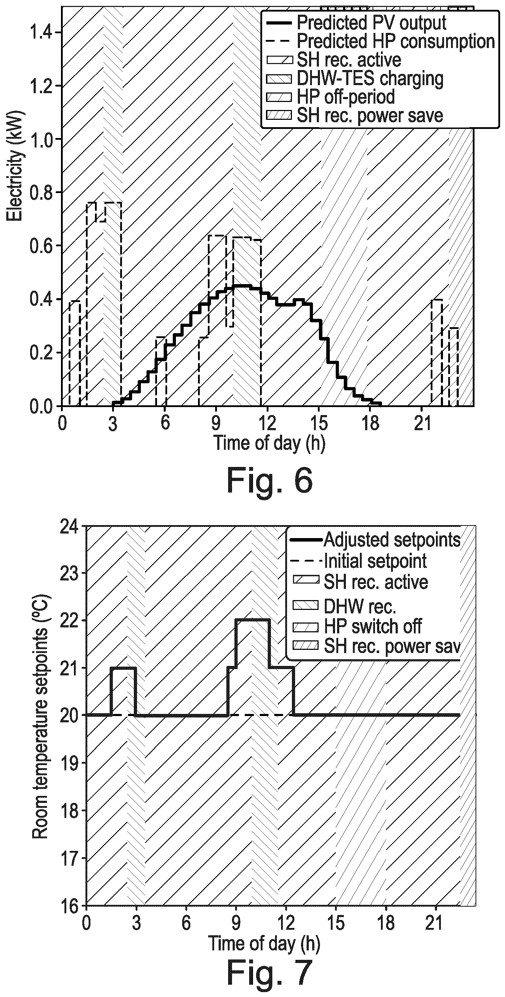

FIG. 6 shows the schedule result for the heat pump operation. The graph shows that the heat pump is turned off for longer periods despite space heating (SH) recommendation, as indicated by the actual heat pump power consumption obtained from a simulation. The room temperature would not drop significantly due to the mild climate in this example, which leads to minimal heat pump operation during most of the day. This schedule demonstrates the system's ability to optimize energy use while maintaining comfort. As with FIG. 5, this figure uses 30-minute time steps for illustration, while the description uses 1-hour time steps.

When the system is equipped with the state of charge (SOC) monitor 72, it can implement a more detailed control for DHW-TES charging. During periods labeled with identifiers "3" and "4", the minimum state of charge threshold is increased to 70-95% to initiate a TES charging cycle. Once the charging cycle is completed or in the next schedule time step, the SOC threshold is reset to a very low level, typically 0-20%. This dynamic threshold adjustment ensures efficient use of the DHW-TES. This allows DHW charging only when the DHW-TES is almost entirely discharged, e.g., on days with very high DHW consumption, and helps maintain comfort of the building. After the completion of the charging cycle, the system reverts to the default control of the internal heat pump controller, which is typically associated with identifier "0".

For a PCM-TES, the SOC can be obtained from enthalpy, heat flow, temperature, pressure, conductivity, and/or electric resistance measurements. For a DHW cylinder, the SOC can be estimated using the following equation, which would require at least two temperature sensors, more preferably five temperature sensors, evenly arranged vertically along the tank:

$$SOC = \frac{T_{tank,avg}}{T_{tank,setpoint}} * 100$$

In addition to forcing DHW-TES charging, the storage temperature can also be increased during this period, e.g. from 50°C in normal operation to 60°C. This allows the increase of the thermal energy storage capacity and to increase power consumption while electricity is cheap.

For example, these settings can include forced DHW, which initiates a DHW-TES charging cycle regardless of the current State-of-Charge (SOC) or DHW tank temperature, linked to identifiers "3" and "4"; space heating prohibition, which deactivates space heating and is used for identifier "6"; system off, beneficial for identifier "1"; flow temperature control mode at adjusted temperature, beneficial to reduce electricity consumption during space heating for identifiers "2" and "6"; and room temperature control mode, beneficial for identifier "5", where the heat pump internal controller modulates the inverter to achieve a room temperature around the setpoint, e.g. 20°C. The system may also include a default operational mode, typically associated with identifier "0", which represents the standard control of the internal heat pump controller when no specific operational state is enforced by the scheduling system.

The operational states are represented by identifiers, as shown in the following table 7:

Table 7

| Identifier | Description |
|---|---|
| 0 | The schedule is inactive and the heat pump internal controller alone is used for control decisions. (Default mode) |
| 1 | Energy conservation period, DHW charging is prohibited and space heating is also be prohibited. |
| 2 | Energy conservation period, DHW charging should be avoided and space heating only as reduced compressor speed to conserve electricity. |
| 3 | Best period for DHW-TES charging #1 |
| 4 | Best period for DHW-TES charging #2 |
| 5 | Space heating is recommended. |
| 6 | Space heating is allowed but less beneficial |

## Implementation of the Operational Schedule

The schedule created by this process is forwarded to the heat pump's internal controller. In a simple implementation, this can be integrated into the heat pump's cloud service. The schedule can then influence predefined settings of the heat pump through the cloud service or an API, including forced DHW charging, space heating prohibition, system off, flow temperature control mode, and room temperature control mode.

Each of the identifiers may correspond one-to-one with the respective operational mode of the heat pump. In this configuration, a simple numerical sequence can instruct the heat pump on which mode to implement during each sub-period of the operational schedule. For example, a 24-hour schedule can be represented by 24 numbers, each corresponding to a specific mode for each hour. This simplifies data transmission, reduces hardware requirements, and improves the system's robustness by allowing the heat pump's internal controller to efficiently process and implement the schedule. Alternatively, character strings or any other signaling methods can be used for the heat pump control.

The use of predefined operational modes represented by simple identifiers enhances system efficiency and robustness. By condensing complex operational decisions into discrete operational state, the system enables the heat pump to be controlled without the need for continuous feedback or real-time calculations, but still allows for detailed and optimised control that is not possible for the heat pump to simply turn on/off. This implementation also improves the flexibility and scalability of system operation, as new operational modes can be easily introduced by defining additional identifiers.

An advantage of this scheduling approach is that it doesn't require a feedback loop between the heat pump and controller. This elimination of constant back-and-forth communication not only reduces the system's complexity but also enhances its reliability and robustness, as it can continue to operate effectively even in cases of temporary communication disruptions. All schedule-based decisions are pre-loaded, with detailed decisions made by the local, internal heat pump controller. Larger tasks like Legionella Cycle and Defrost Cycle remain with the local controller and are initiated as required, typically under identifier "5".

In addition to the primary schedule, a secondary schedule can be calculated to modulate the compressor speed directly if a detailed heat pump and building model are available. This can be beneficial for maximizing compressor frequency during DHW-TES charging (identifiers "3" and "4") or minimizing it during low power consumption periods (identifier "2"). This secondary schedule would overwrite the local heat pump controllers' own decisions on some occasions, to control thermal output during space heating, but not in others including the safety features.

Furthermore, it can be beneficial to use building and heat pump performance models to obtain a tertiary schedule to change and adjust room temperature setpoints throughout the day. This can be beneficial to increase thermal comfort during cold days, where the room temperature drops during DHW-TES charging and energy conservation periods, due to heat losses from the building. The room temperature setpoints can be increased by 0.5-2°C, depending on the building's heat loss characteristics, before identifiers "1", "2", "3", "4", and "6". It is beneficial to define a temperature setpoint for each time step in the primary schedule. The increased setpoint allows reduced or no heat pump operation during high price periods, while maintaining the room temperature above a minimum threshold, e.g. 20°C.

FIG. 7 illustrates how the room temperature setpoint is adjusted throughout the day to enhance thermal comfort and energy efficiency. In this example, the room temperature setpoint is increased from 20°C to 21°C or 22°C before periods of DHW-TES charging. This preemptive increase in temperature helps maintain comfort during periods when the heat pump may be focused on DHW production or operating at reduced capacity for energy conservation. The graph demonstrates how the system balances comfort and energy efficiency by strategically adjusting temperature setpoints.

The effectiveness of this scheduling approach has been demonstrated through research, with cost savings observed across different regions. In Southern Europe, where there is typically higher solar PV availability and lower heating demand, the system has shown potential cost reductions of up to 30% compared to heat pump controllers without scheduling capability. In Northern regions such as Norway and Scotland, while the savings are more modest due to lower solar availability and higher heating demands, the system still achieves cost reductions of around 15%. These regional variations highlight the system's adaptability to different climatic conditions and energy landscapes.

The HVAC system and method helps to reduce operating costs, but also improves self-sufficiency and self-consumption by creating a schedule of different heat pump operating modes and setpoints. By considering the heat pump performance as well as solar PV production, the control addresses many objectives at once, because heat pump performance, and the use of PV electricity both contribute to cost savings as well as to self-sufficiency and $CO_2$ reduction.

## Modification 1

In addition to cost-savings, self-consumption, and self-sufficiency, the controller can address more objectives for savings and/or improvements. Another objective can be carbon emissions from the system.

Carbon emission intensity forecasts can be obtained from an API, e.g. as they are available for the UK and https://carbonintensity.org.uk/. The carbon emission forecasts can be used instead of the time of use tariff forecast to minimise carbon emission by taking the grid carbon load as well as local renewable electricity like PV into account. Carbon intensity $I_{CO2}$ is provided in $gCO2/kWh$.

The carbon emissions can be used instead of in addition to the ToU tariff prices in the description above. Periods of very high grid and local carbon emissions can be excluded from the heat pump schedule.

Similar to above the carbon emissions are calculated by first calculating imported electricity as $P_{el,imp} = P_{el,HP} - P_{PV}$, then multiplying imported electricity with carbon intensity forecast to obtain emissions as $E_{CO2} = I_{CO2} * P_{el,imp}$. The new parameter $E_{CO2}$ is then used according to the steps outlined in section five to obtain an operating schedule.

## Modification 2

An electric energy storage system (EES), i.e. a rechargeable electric battery, can be a beneficial addition to the overall system. The EES can be used to store all excess PV electricity to maximise self-consumption and self-sufficiency. In addition, it can be charged when the price of the grid electricity is low, e.g. during the night. If a sufficiently large PV system is available, the schedule can be amended that the controller checks PV availability during the day as well as the current SOC of the EES to determine, if energy autarky from PV and/or EES systems is possible this day.

This can be done by downloading external weather and ToU data, prediction of PV generation (optionally for a time horizon of several days), checking status of the EES SOC and DHW-TES SOC, predicting the energy demand for space heating and DHW, and determining if energy autarky is possible from PV and EES. If yes, no operating schedule is created and the heat pump controller maintains comfort within the building. Otherwise, a schedule is created.

The methodology of the EES can be extended by an electric vehicle (EV) and bidirectional charger. An EV may be a less reliable source of electricity as it is not stationary. Therefore, it may not fully replace a domestic EES. However, if it is parked in front of the house and sufficiently charged, it can also be used to overcome high-price ToU periods that neither the domestic EES or the PV system can cover. This can be beneficial, when the room temperature drops on cold days with high prices.

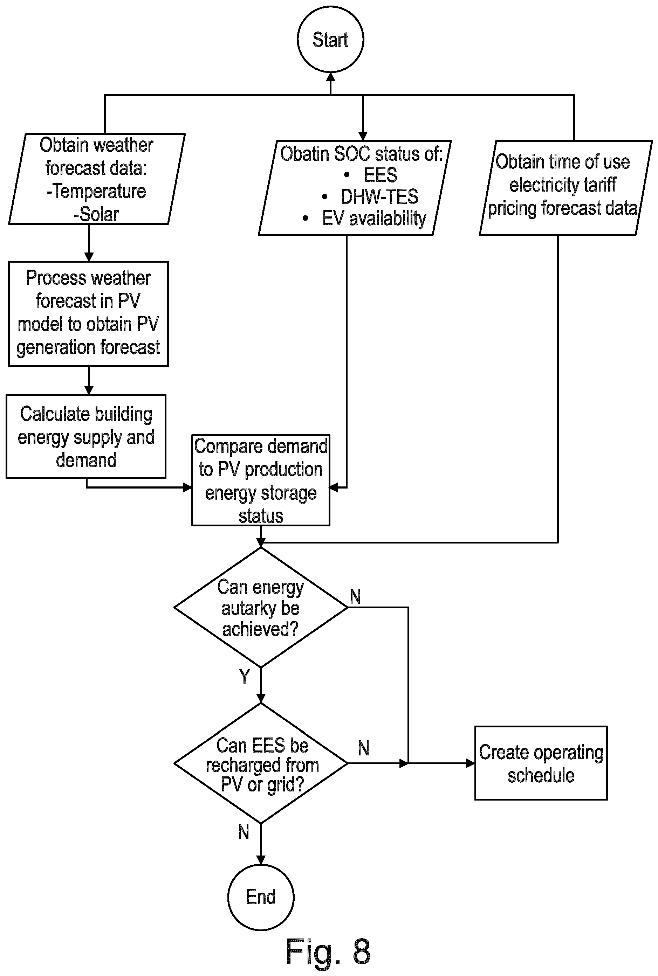

As shown in FIG. 8, the preliminary logic in the presence of EES determines the necessity of creating a schedule.

The flowchart illustrates the process of obtaining external data, predicting PV generation, checking EES and DHW-TES SOC, predicting energy demand, and determining if energy autarky is possible. If autarky is possible, the heat pump controller maintains comfort without creating a schedule. Otherwise, a schedule is created to optimize energy usage.

## Modification 3

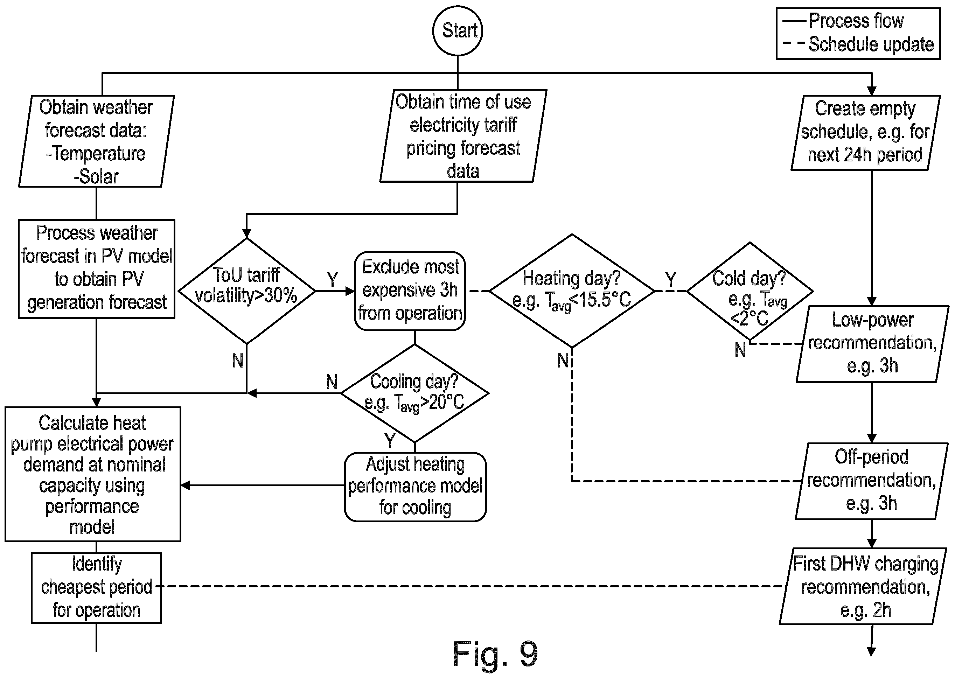

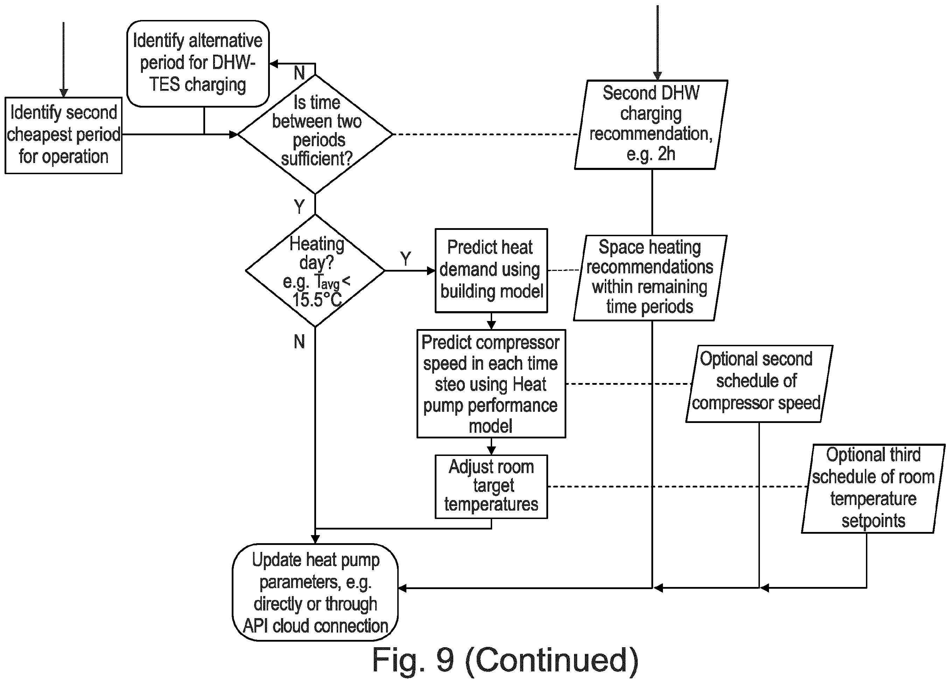

In warmer climates, air conditioning can be included in the control logic as shown in the schematic in FIG. 9. The air conditioning can be provided either by the heat pump having cooling capabilities or by at least one additional air conditioning unit.

The controller checks if the temperature forecast and solar gains induced by solar irradiance are high and above a threshold. Alternatively, the building model can used to calculate room temperatures from forecast data and to establish the necessity for space cooling. The heating performance models are then adjusted to account for cooling. An example of this implementation is shown in FIG. 9.

FIG. 9 illustrates the main schematic adjusted for cooling. The flowchart shows how the system integrates cooling functionality into the control logic. It includes steps for obtaining weather forecasts, predicting room temperatures, determining cooling necessity, and adjusting the heat pump operation for cooling mode when required. This ensures that the system can efficiently manage both heating and cooling needs throughout the year.

## Modification 4

It can be advantageous to monitor the accuracy of the forecast in general. The three main forecast features are the time-varying price of electricity per unit of electricity, solar irradiance, and ambient temperature.

A deviation of any of the three main forecast features from the measured values by a pre-determined threshold, e.g. 20%, can initiate an update of the schedule for the remaining period or for another full period, e.g. 24h.

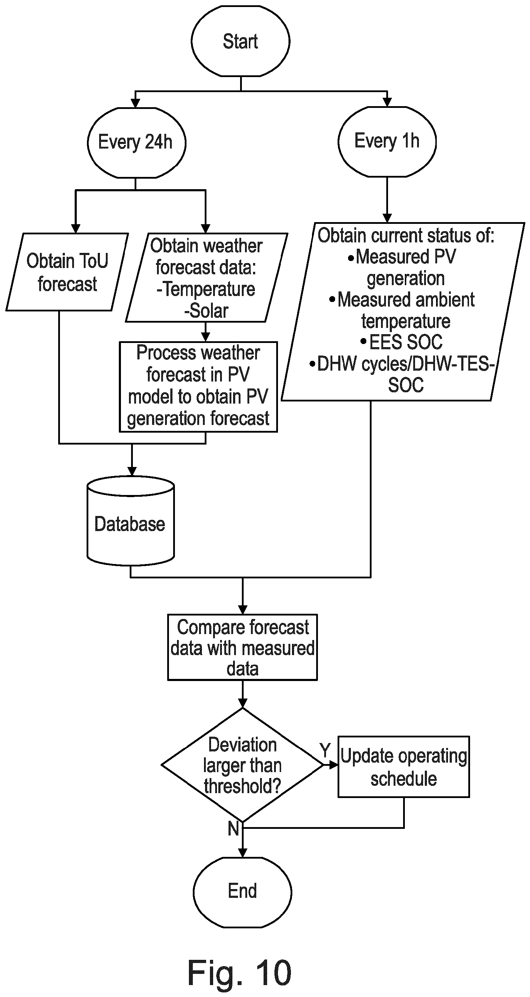

If the schedule's only updated for the remainder of the period, it can be beneficial to consider the number of previous DHW charging cycles and/or the DHW-TES-SOC to establish the suitable number of outstanding DHW charging cycles during this period. It can be beneficial, if this is supported by DHW usage profiles either predefined or obtained from usage data in the optional database as shown in FIG. 10.

FIG. 10 demonstrates an example schematic to check the accuracy of forecast data every hour by comparing the forecasts to the actual, measured values. The flowchart shows the process of obtaining forecast data (ToU and weather) every 24 hours, and current system status (PV generation, ambient temperature, EES SOC, DHW cycles) every hour. These values are then compared to determine if the deviation exceeds a threshold. If so, the operating schedule is updated to ensure optimal system performance based on the most current and accurate data. The first modification focuses on minimizing the system's environmental impact by targeting carbon emissions reduction. This approach replaces the time-of-use tariff with carbon intensity forecasts. Carbon emission intensity forecasts, available from APIs such as those in the UK, consider both grid carbon load and local renewable energy sources like PV The carbon intensity is provided in g CO2/kWh and is used to create the operating schedule: First, the imported electricity is calculated by subtracting PV generation from heat pump consumption. Then, the carbon intensity forecast is multiplied by the imported electricity to obtain emissions. Finally, a new parameter, ECO2, is used to create the schedule following the steps outlined in section five. This modification allows the system to minimize not only energy costs but also environmental impact.

## Abbreviations

| amb | Ambient |
| avg | Average |
| C | Electricity cost |
| $CO_2$ | Carbon dioxide |
| COP | Coefficient of Performance |
| DHW | Domestic hot water |
| E | Emissions |
| EES | Electric energy storage |
| El | Electricity |
| EV | Electric vehicle |
| HP | Heat pump |
| I | Intensity |
| Imp | Imported |

N        Decision result negative - No
P        Power
PCM      Phase change material
PV       Photovoltaics
rec.     Recommended period
SH       Space heating
SOC      State of charge
T        Temperature
TES      Thermal energy storage
ToU      Time-of-use tariff
Y        Decision result positive - Yes

**Claims**

1. A method of operating a HVAC system, the system comprising a heat pump and a thermal energy storage (TES) device which is thermally connected to the heat pump, the method comprising:

   - dividing an operational period into a number of sub-periods,
   - obtaining, for at least some of the sub-periods, information for operating the heat pump,
   - determining, based on the information, an operational state for the heat pump for the sub-period; and
   - controlling the heat pump based on the determined operational state.

2. The method according to claim 1, wherein the operational state is selected from a plurality of operational states including:

   a first operational state to prohibit the heat pump from operating, and
   a second operational state to operate the heat pump for thermally charging the thermal energy storage device.

3. The method according to claim 1 or 2, wherein the determining the operational state comprises:

   - identifying a first set of one or at least two consecutive sub-periods based on the information within the operational period; and
   - determining the operational state as the first operational state to the first set of the sub-periods.

4. The method according to claim 3, wherein the determining the operational state as the first operational state to the first set of the sub-periods is performed only when a volatility of the information over the operational period exceeds a predetermined threshold.

5. The method according to claim 3 or 4, wherein the determining the operational state comprises:

   - identifying, among the sub-periods for which the first operational state is not determined, a second set of one or at least two consecutive sub-periods based on the information within the operational period; and
   - determining the operational state as the second operational state to the second set of the sub-periods.

6. The method according to claim 5, wherein the determining the operational state further comprises:

   - identifying, among the sub-periods for which any operational state is not determined, a third set of one or at least two consecutive sub-periods based on the information within the operational period; and
   determining the operational state as the second operational state to the third set of the sub-periods,
   wherein a predetermined time interval is provided between the second set of the sub-periods and the third set of the sub-periods.

7. The method according to claim 5 or 6, wherein the system further comprises a heating and/or a cooling emitter, the emitter being thermally connected to the heat pump, and wherein the plurality of operational states further includes a third operational state to operate the heat pump for space heating or cooling by means of the emitter, wherein the determining the operational state comprises:

   - identifying, among the sub-periods for which any operational state is not determined, a fourth set of one or at least two consecutive sub-periods based on the information within the operational period; and
- determining the operational state as the third operational state to the fourth set of the sub-periods.

8. The method according to any preceding claim, wherein
the information for operating the heat pump includes cost information for operating the heat pump.

9. The method according to claim 8, wherein
the information for operating the heat pump further includes environmental information.

10. The method according to claim 9, wherein the system further comprises a photovoltaic (PV) unit for generating electrical energy, wherein the method further comprises:

- determining, based on the environmental information, predicted energy generation by the PV unit; and
- determining the operational state also based on the predicted energy generation.

11. The method according to claim 10, wherein the determining the operational state further comprises:

- identifying, based on the predicted energy generation by the PV unit, at least some of the sub-periods during which the building is expected to have a surplus of electrical energy from the PV unit; and
- determining the operational state as the second operational state for at least some of the identified sub-periods.

12. The method according to any one of claims 2 to 11, wherein

the HVAC system is for a building, and
the heat pump is controlled to operate in a low power mode in the first operational state when ambient temperature of the building based on the environmental information is below a predetermined threshold.

13. The method according to any preceding claim, wherein the sub-period is within a range between 5 to 120 minutes, preferably 30 to 60 minutes.

14. The method according to any preceding claim, wherein the operational state is represented by an identifier selected from a plurality of predefined identifiers, wherein the method further comprises:

- generating a sequence of identifiers for the operational period based on the determined operational states for the sub-periods; and
- controlling the heat pump throughout the operational period based on the sequence of identifiers.

15. A HVAC system comprising a heat pump, a thermal energy storage (TES) device which is thermally connected to the heat pump, and a scheduler for determining an operational state of the heat pump, wherein the scheduler is configured to:

- divide an operational period into a number of sub-periods,
- obtain, for at least some of the sub-periods, information for operating the heat pump, and
- determine, based on the information and the environmental information, an operational state for the heat pump for the sub-period;
- wherein the heat pump is configured to operate according to the determined operational state.

HVAC System 10

Fig. 1

- Pipes
- - - Data connection

Forecast data:
-Weather
-ToU Tariff pricing

Schedule computing

Numeric models and/or machine learning models of building and heat pump performance

Optional database of building thermal response for fitting of building model parameters and/or training of machine learning model

This can run either on a central server computer/datacenter and/or local computing unit

Schedule setpoints and recommendations

Local heat pump internal controller

HEAT PUMP

Fig. 2

```
                                    ┌─── Process flow
                                    │--- Schedule update

                          ( Start )

┌──────────────┐      ┌──────────────┐      ┌──────────────┐
│Obtain weather│      │ Obtain time of│     │Create empty  │
│forecast data:│      │use electricity│     │schedule, e.g. for│
│-Temperature  │      │tariff pricing │     │next 24h period│
│-Solar        │      │forecast data  │     │              │
└──────┬───────┘      └──────┬───────┘      └──────┬───────┘
       │                     │                     │
┌──────▼───────┐             │                     │
│Process weather│            │                     │
│forecast in PV model│       │                     │
│to obtain PV  │      ◇──────▼──────◇  ┌─────────┐ │
│generation forecast│  ◇ ToU tariff  ◇ Y│Exclude most│  ◇─────────◇   ◇─────────◇
└──────┬───────┘    ◇volatility > 30%◇─▶│expensive 3h│- ◇Heating day? ◇ Y◇Cold day? ◇      │
       │             ◇─────┬──────◇     │from operation│ ◇e.g. Tavg<15.5°C◇─◇e.g. Tavg<2°C◇    │
       │                   │N           └─────┬──────┘  ◇─────┬──────◇   ◇─────┬─────◇         │
┌──────▼───────┐           │                  │              │N              │N        ┌──────▼──────┐
│Calculate heat│           │                  │              │               └ - - - ─│Low-power    │
│pump electrical power│    │                  │              │                        │recommendation,│
│demand at nominal│◀───────┘──────────────────┘              │                        │e.g. 3h      │
│capacity using│                                             │                        └──────┬──────┘
│performance   │                                             │                               │
│model         │                                             │                        ┌──────▼──────┐
└──────┬───────┘                                             │                        │Off-period   │
       │                                                     └ - - - - - - - - - - - - │recommendation,│
┌──────▼───────┐                                                                      │e.g. 3h      │
│Identify      │                                                                      └──────┬──────┘
│cheapest period│- - - - - - - - - - - - - - - - - - - - - - - - - - - - - - - - - -        │
│for operation │                                                                     ┌──────▼──────┐
└──────┬───────┘                                                                     │First DHW charging│
       │                                                                             │recommendation,│
       ▼                                                                             │e.g. 2h      │
                                                                                     └──────┬──────┘
                                                                                            ▼
```

## Fig. 3

Fig. 3 (Continued)

EP 4 764 337 A1

Fig. 4

(a)

(b)

Fig. 5

Fig. 6

Fig. 7

Start

Obtain weather forecast data:
-Temperature
-Solar

Obatin SOC status of:
- EES
- DHW-TES
- EV availability

Obtain time of use electricity tariff pricing forecast data

Process weather forecast in PV model to obtain PV generation forecast

Calculate building energy supply and demand

Compare demand to PV production energy storage status

Can energy autarky be achieved?

N

Y

Can EES be recharged from PV or grid?

N

Create operating schedule

N

End

Fig. 8

Fig. 9

EP 4 764 337 A1

Fig. 9 (Continued)

Fig. 10

Europäisches
Patentamt

European
Patent Office

Office européen
des brevets

**EUROPEAN SEARCH REPORT**

Application Number

EP 24 22 1914

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 253 848 A1 (MITSUBISHI ELECTRIC R&D CT EUROPE BV [GB] ET AL.) 4 October 2023 (2023-10-04) | 1,2, 8-12,15 | INV. F24F11/46 G05D23/19 G05B13/04 F24H15/164 |
| A | * paragraphs [0039] - [47;60]; figures 1A-1C * | 3-7,13, 14 | |
| | ----- | | |
| X | US 2014/332195 A1 (LIBERMAN IZIDOR [IL]) 13 November 2014 (2014-11-13) | 1,2, 8-13,15 | |
| A | * paragraphs [0038] - [0115], [0136]; figures 1-4 * | 3-7,14 | |
| | ----- | | |
| X | EP 3 196 558 A1 (SHARP KK [JP]) 26 July 2017 (2017-07-26) | 1,2, 8-13,15 | |
| A | * paragraphs [0038] - [0060]; figures 5,6 * | 3-7,14 | |
| | ----- | | |
| X | JP 2024 072961 A (NORITZ CORP) 29 May 2024 (2024-05-29) | 1,2, 8-13,15 | |
| A | * paragraphs [0041] - [0099]; figures 3-6 * | 3-7,14 | |
| | ----- | | |

**TECHNICAL FIELDS
SEARCHED (IPC)**

F24F
G05D
G05B
F24H

The present search report has been drawn up for all claims

| Place of search | Date of completion of the search | Examiner |
|---|---|---|
| The Hague | 28 May 2025 | Groen, Fokke |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.......................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 22 1914

This annex lists the patent family members relating to the patent documents cited in the above-mentioned European search report.
The members are as contained in the European Patent Office EDP file on
The European Patent Office is in no way liable for these particulars which are merely given for the purpose of information.

28-05-2025

| Patent document cited in search report | | Publication date | Patent family member(s) | | Publication date |
|---|---|---|---|---|---|
| EP 4253848 | A1 | 04-10-2023 | EP | 4253848 A1 | 04-10-2023 |
| | | | US | 2023318296 A1 | 05-10-2023 |
| US 2014332195 | A1 | 13-11-2014 | US | 2014332195 A1 | 13-11-2014 |
| | | | WO | 2013105087 A1 | 18-07-2013 |
| EP 3196558 | A1 | 26-07-2017 | EP | 3196558 A1 | 26-07-2017 |
| | | | US | 2017211862 A1 | 27-07-2017 |
| JP 2024072961 | A | 29-05-2024 | CN | 118049756 A | 17-05-2024 |
| | | | JP | 2024072961 A | 29-05-2024 |
| | | | US | 2024167728 A1 | 23-05-2024 |

EPO FORM P0459

For more details about this annex : see Official Journal of the European Patent Office, No. 12/82

**REFERENCES CITED IN THE DESCRIPTION**

**Patent documents cited in the description**

- WO 2022168049 A1